# EUROPEAN PATENT SPECIFICATION

(11) **EP 4 507 908 B1**
(45) Date of publication and mention of the grant of the patent: **13.05.2026**
(21) Application number: 23719380.0
(22) Date of filing: 13.04.2023
(51) Int. Cl.: B60H 1/00

(54) **VEHICULAR AIR CONDITIONER**
FAHRZEUGKLIMAANLAGE
CLIMATISEUR DE VÉHICULE

(30) Priority: 14.04.2022 JP 2022067206
(43) Date of publication of application: 19.02.2025
(73) Proprietor: Valeo Electrification, 95892 Cergy Pontoise (FR)
(72) Inventor: UENO, Shota, kumagaya-shi Saitama-ken Kumagaya-shi, 360-0193 (JP)
(74) Representative: Valeo Powertrain Systems
(86) International application number: PCT/EP2023/059734
(87) International publication number: WO 2023/198863

(56) References cited:
- EP-A1- 2 149 464
- EP-A1- 3 683 075
- EP-A1- 3 708 393

## Description

### Technical Field

The present invention relates to a vehicular air conditioner including a "butterfly-type" mix door.

### Background Art

Many vehicles such as passenger vehicles include a vehicular air conditioner for conditioning a temperature by taking in outside air or inside air into a vehicle interior. PTL 1 discloses a vehicular air conditioner in the related art.

The vehicular air conditioner disclosed in PTL 1 includes a case in which air flows, a cooling heat exchanger capable of cooling the air flowing through the case, and a heater capable of heating the air flowing out from the cooling heat exchanger.

Further, in the case, a warm air passage through which the air flowing out from a first heater or a second heater flows, a cool air passage through which the air flowing out from the cooling heat exchanger flows without being heated by the first heater, a mix door capable of adjusting a ratio of the air flowing through the warm air passage to the air flowing through the cool air passage, and a mix space in which the air flowing through the warm air passage and the air flowing through the cool air passage merge are formed.

The mix door is a so-called butterfly-type mix door, and includes a rotation shaft, and an upstream extension door and a downstream extension door that extend from the rotation shaft in substantially opposite directions to each other. When the rotation shaft rotates, positions of the downstream extension door and the upstream extension door change, the ratio of the air in the warm air passage flowing into the mix space to the air in the cool air passage flowing into the mix space changes, and a temperature of conditioned air conditioned in the mix space can be changed. The conditioned air is discharged into the vehicle interior through a duct or the like.

### Citation List

### Patent Literature

PTL 1: JP2017-132380A
EP2149464 A1 relates to an air-conditioning assembly for vehicles including a casing (12), which in turn includes a cooling chamber (18), a heating chamber (20), and a mixing chamber (22). The assembly (10) includes a mixing device (48), which in turn includes a first mixing flap (50) articulated to the casing (12) and mobile between two end positions, and a second mixing flap (60), which in turn includes a first portion (62) articulated to the casing and a second portion (64) articulated to the first portion (62) with a free end that engages a stationary guide (70). The first and second mixing flaps (50, 60) are connected together by means of a transmission mechanism (76) that reverses the movements of rotation of the first and second mixing flaps (50, 60) about the respective axes of articulation (52, 66).
EP3683075 A1 and EP3708393 A1 are also cited prior arts.

### Summary of Invention

### Technical Problem

A heater of the vehicular air conditioner in the related art includes the first heater and the second heater that are disposed along a flow direction of the air. Warm air flowing out from the first heater can be further heated by passing through the second heater, and thus the vehicular air conditioner becomes a product suitable for use in a cold district.

However, when compared with a vehicular air conditioner including a single heater, since two heaters are provided in the case, a size of the vehicular air conditioner is likely to increase due to dimensions in the vicinity of the first heater and the second heater in the flow direction of the air.

An object of the invention is to provide a technique capable of preventing an increase in a size of a vehicular air conditioner including a plurality of heaters and a "butterfly-type" mix door.

### Solution to Problem

In the following description, reference signs in the accompanying drawings are appended in parentheses to facilitate understanding of the invention, but the invention is defined by the appended claims and is not limited to the illustrated embodiment.

The invention provides a vehicular air conditioner (10) including: a case (20) in which air flows; a cooling heat exchanger (13) capable of cooling the air flowing through the case (20); a first heater (31) capable of heating the air flowing out from the cooling heat exchanger (13); a second heater (36) capable of heating the air flowing out from the first heater (31); a warm air passage (50) through which the air flowing out from the first heater (31) or the second heater (36) flows; a cool air passage (40) through which the air flowing out from the cooling heat exchanger (13) flows without being heated by the first heater (31); a mix door (60) capable of adjusting a ratio of the air flowing through the warm air passage (50) to the air flowing through the cool air passage (40); and a mix space (27) in which the air flowing through the warm air passage (50) and the air flowing through the cool air passage (40) merge, in which
the mix door (60) includes a butterfly door portion (61) including a rotation shaft (62) substantially orthogonal to a flow direction of the air flowing through the cool air passage (40), an upstream extension door (71) extending from the rotation shaft (62) and being movable upstream of the rotation shaft (62), and a downstream extension door (81) extending from the rotation shaft (62) in a direction substantially opposite to a direction in which the upstream extension door (71) extends,
in the mix door (60), the upstream extension door (71) and the downstream extension door (81) swing about the rotation shaft (62), and the mix door (60) is capable of being located at a full-cool position at which a ratio of the air flowing through the warm air passage (50) is minimized, a full-hot position at which the ratio of the air flowing through the warm air passage (50) is maximized, and a temperature conditioning position at which neither the ratio of the air flowing through the warm air passage (50) nor a ratio of the air flowing through the cool air passage (40) is maximized,
a downstream driven door (83) having a plate shape is connected to an extended tip end of the downstream extension door (81) via a downstream hinge (82),
a downstream door diameter (R2) from the rotation shaft (62) to a tip end of the downstream driven door (83) is variable,
the downstream door diameter (R2) is smaller when the mix door (60) is at the full-cool position than that when the mix door (60) is at the full-hot position, and
the downstream driven door (83) is bent toward upstream of the downstream extension door (81) in the warm air passage (50) when the mix door (60) is at the full-cool position.

Preferred embodiments of the present invention are laid down in the appended dependent claims.

### Advantageous Effects of Invention

The downstream door diameter (R2) at the full-cool position is smaller than the downstream door diameter (R2) at the full-hot position. Further, at the full-cool position, the downstream driven door (83) is bent toward upstream of the downstream extension door (81) in the warm air passage (50). When the mix door (60) moves, a passing region of the downstream extension door (81) is smaller. Therefore, a wall surface of the warm air passage (50) can be brought close to the rotation shaft (62) of the mix door (60), and the warm air passage (50) in the case (20) can be reduced in size, thereby preventing an increase in size of the vehicular air conditioner (10).

### Brief Description of Drawings

[FIG. 1] FIG. 1 is a perspective view of a vehicular air conditioner according to an embodiment.
[FIG. 2] FIG. 2 is a schematic cross-sectional view of the vehicular air conditioner illustrated in FIG. 1.
[FIG. 3] FIG. 3 is a view (a portion surrounded by a line 3 in FIG. 2) illustrating a configuration of a mix door at a temperature conditioning position and an air flow.
[FIG. 4A] FIG. 4A is a view illustrating the mix door at a full-cool position.
[FIG. 4B] FIG. 4B is a view illustrating the mix door at the temperature conditioning position.
[FIG. 4C] FIG. 4C is a view illustrating the mix door at a full-hot position.
[FIG. 5] FIG. 5 is a view illustrating the configuration of the mix door at the full-hot position and the air flow.
[FIG. 6] FIG. 6 is a view illustrating the configuration of the mix door at the full-cool position and the air flow.
[FIG. 7A] FIG. 7A is a schematic view of a vehicular air conditioner according to a comparative example in the related art.
[FIG. 7B] FIG. 7B is a schematic view of the vehicular air conditioner according to the embodiment.

### Description of Embodiments

An embodiment will be described below with reference to the accompanying drawings. In the drawings, Fr indicates a front side, Rr indicates a rear side, L indicates a left side with an occupant in a vehicle interior as a reference, R indicates a right side with the occupant in the vehicle interior as the reference, Up indicates an upper side, and Dn indicates a lower side. Further, "upstream" and "downstream" in the following description are set with a flow direction of air as a reference.

### <Embodiment>

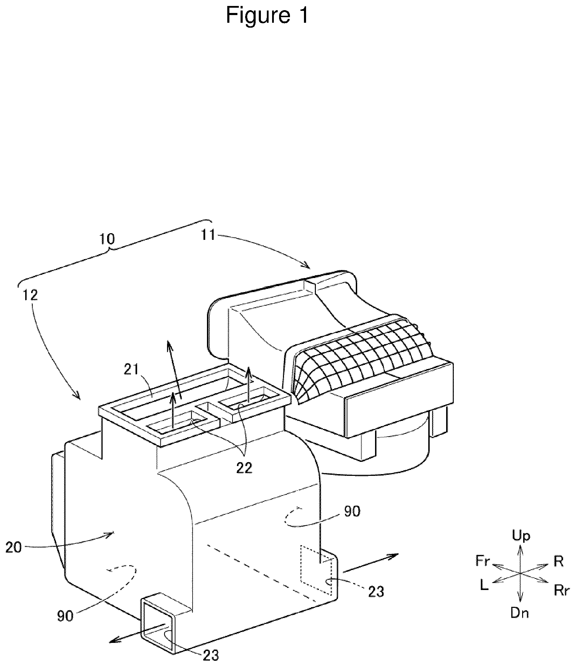

FIG. 1 illustrates a vehicular air conditioner 10 that adjusts a temperature by taking in outside air or inside air into a vehicle interior. The vehicular air conditioner 10 is mounted on, for example, a passenger vehicle, and extends in a left-right direction at the front part of the vehicle interior.

The vehicular air conditioner 10 includes an air blower 11 that blows inhaled air, and a temperature regulator 12 that regulates a temperature of air blown from the air blower 11 and blows out conditioned air into the vehicle interior.

An electric motor and an impeller driven by the electric motor are provided in the air blower 11. When the impeller rotates, air inside and/or outside the vehicle interior is inhaled into the air blower 11.

The temperature regulator 12 includes a case 20 in which the air blown from the air blower 11 flows. Openings 21 to 23 opened for blowing out the conditioned air are formed in the case 20.

The openings 21 to 23 include a defroster opening 21 for blowing the conditioned air toward a windshield to remove fog on the windshield, vent openings 22 for blowing the conditioned air toward an upper body of an occupant on a front seat, and foot openings 23 and 23 for blowing the conditioned air toward feet of the occupant on the front seat.

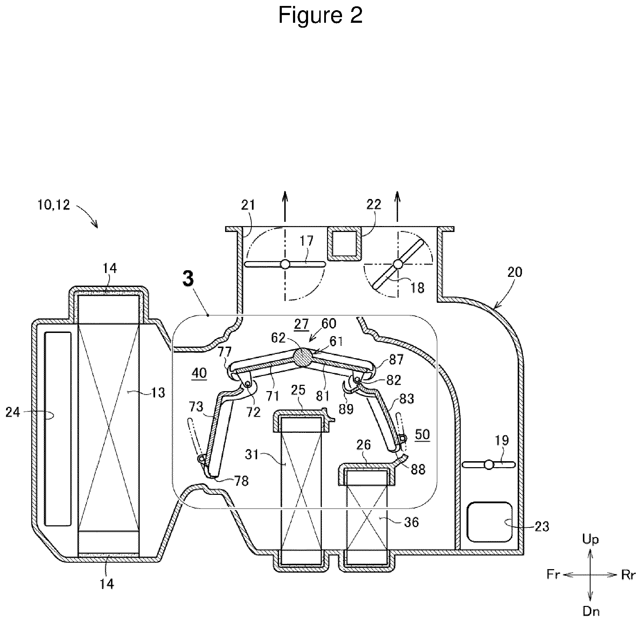

FIG. 2 is a cross-sectional view of the temperature regulator 12. FIGS. 1 and 2 are referred to in combination. The defroster opening 21 can be opened and closed by an opening and closing member 17. The vent openings 22 can be opened and closed by an opening and closing member 18. The foot openings 23 and 23 can be opened and closed by opening and closing members 19 and 19.

The case 20 of the temperature regulator 12 includes an intake portion 24 that is open to take in the air blown from the air blower 11 into the case 20.

The case 20 accommodates a cooling heat exchanger 13 capable of cooling the air flowing out from the intake portion 24. Gaps between the cooling heat exchanger 13 and the case 20 are preferably filled with sealing materials 14 and 14.

The case 20 accommodates a first heater 31 capable of heating the air flowing out from the cooling heat exchanger 13. A first support portion 25 that supports an upper end portion of the first heater 31 is provided in the case 20. A gap between the first support portion 25 and the upper end portion of the first heater 31 is preferably filled with a sealing material. A gap between a lower end portion of the first heater 31 and the case 20 is preferably filled with the sealing material.

The case 20 accommodates a second heater 36 capable of heating at least a part of the air flowing out from the first heater 31 by being disposed downstream of the first heater 31. The first heater 31 and the second heater 36 have different heights from each other and are disposed in a stepwise manner.

A second support portion 26 that supports an upper end portion of the second heater 36 is provided. A gap between the second support portion 26 and the upper end portion of the second heater 36 is preferably filled with the sealing material. A gap between a lower end portion of the second heater 36 and the case 20 is preferably filled with the sealing material. The first heater 31 and the second heater 36 may be any of a heater that generates heat by electric power, a heater through which warm water flows, and a heater through which a high-temperature refrigerant flows. In addition, the first heater 31 and the second heater 36 may have different heat sources.

### [Warm Air Passage, Cool Air Passage, and Mix Space]

In the case 20, a warm air passage 50 through which the air flowing out from the first heater 31 or the second heater 36 flows, a cool air passage 40 through which the air flowing out from the cooling heat exchanger 13 flows in a cool-air state without being heated by the first heater 31 and the second heater 36, and a mix space 27 (a main mix space 27) in which the air flowing through the warm air passage 50 and the air flowing through the cool air passage 40 merge are formed.

### [Mix Door]

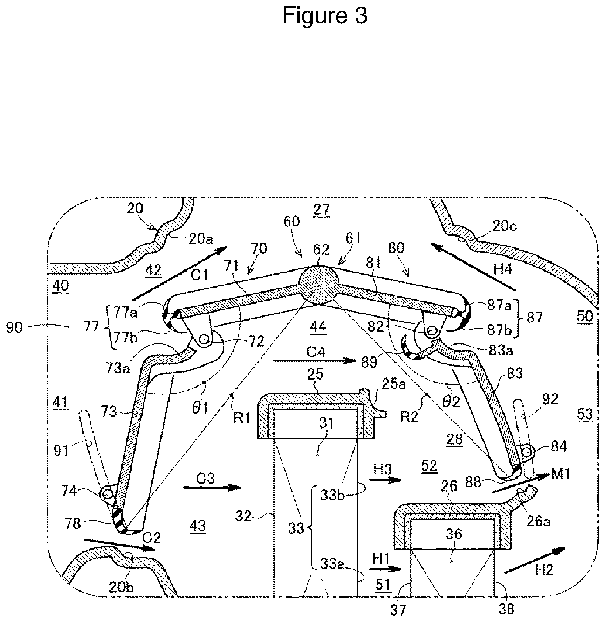

Reference is made to FIG. 3. A mix door 60 capable of adjusting a ratio of the air flowing through the warm air passage 50 to the air flowing through the cool air passage 40 is provided in the case 20.

### [Butterfly Door Portion]

The mix door 60 includes a butterfly door portion 61 including two plate-shaped doors 71 and 81 capable of swinging about a rotation shaft 62.

### [Rotation Shaft, Upstream Extension Door, and Downstream Extension Door]

Specifically, the butterfly door portion 61 includes the rotation shaft 62 whose axis extends in a direction substantially orthogonal to a flow direction of the air flowing through the cool air passage 40, the upstream extension door 71 extending from the rotation shaft 62 and being movable upstream of the rotation shaft 62, and the downstream extension door 81 extending from the rotation shaft 62 in a direction substantially opposite to a direction in which the upstream extension door 71 extends.

### [Upstream Hinge and Upstream Driven Door]

An upstream driven door 73 having a plate shape is connected to the upstream extension door 71 via an upstream hinge 72. The upstream driven door 73 is preferably provided at an extended tip end of the upstream extension door 71 or in the vicinity of the extended tip end of the upstream extension door 71.

### [Upstream Sealing Members]

Each door has a rectangular shape. An upstream intermediate sealing member 77 is provided at an edge of the upstream extension door 71. An upstream tip end sealing member 78 is provided at an edge of the upstream driven door 73.

### [Upstream Door Diameter and Upstream Door Angle]

The upstream driven door 73 can swing about the upstream hinge 72 with respect to the upstream extension door 71. An upstream groove 91 capable of guiding swinging of the upstream driven door 73 is formed on side wall surfaces 90 and 90 (see also FIG. 1) of the case 20. An upstream pin 74 that is slidable with respect to the upstream groove 91 is attached to the vicinity of a tip end of the upstream driven door 73. By appropriately changing a shape and a position of the upstream groove 91, a trajectory of the upstream driven door 73 can be appropriately changed.

When the rotation shaft 62 rotates, an upstream door diameter R1 from the rotation shaft 62 to the upstream tip end sealing member 78 of the upstream driven door 73 varies. An upstream door angle θ1 formed by the upstream driven door 73 and the upstream extension door 71 is also variable. The upstream door angle θ1 is always 180 degrees or less. Hereinafter, the upstream extension door 71, the upstream hinge 72, and the upstream driven door 73 are collectively referred to as an upstream door 70.

### [Downstream Hinge and Downstream Driven Door]

A downstream driven door 83 having a plate shape is connected to the downstream extension door 81 via a downstream hinge 82. The downstream driven door 83 is preferably provided at an extended tip end of the downstream extension door 81 or in the vicinity of the extended tip end of the downstream extension door 81.

### [Downstream Sealing Members]

A downstream intermediate sealing member 87 is provided at an edge of the downstream extension door 81. A downstream tip end sealing member 88 is provided at an edge of the downstream driven door 83. A downstream second intermediate sealing member 89 is provided at a proximal end 83a (an end portion on a side close to the rotation shaft 62) of the downstream driven door 83. Instead of being provided at the proximal end 83a of the downstream driven door 83, the downstream second intermediate sealing member 89 may be provided at a corner 25a of the first support portion 25 to be described later.

### [Downstream Door Diameter and Downstream Door Angle]

The downstream driven door 83 can swing about the downstream hinge 82 with respect to the downstream extension door 81. A downstream groove 92 capable of guiding swinging of the downstream driven door 83 is formed on the side wall surfaces 90 and 90 of the case 20. A downstream pin 84 that is slidable with respect to the downstream groove 92 is attached to the vicinity of a tip end of the downstream driven door 83. By appropriately changing a shape and a position of the downstream groove 92, a trajectory of the downstream driven door 83 can be appropriately changed.

When the rotation shaft 62 rotates, a downstream door diameter R2 from the rotation shaft 62 to the downstream tip end sealing member 88 of the downstream driven door 83 varies. A downstream door angle θ2 formed by the downstream driven door 83 and the downstream extension door 81 is also variable. The downstream door angle θ2 is always 180 degrees or less. Hereinafter, the downstream extension door 81, the downstream hinge 82, and the downstream driven door 83 are collectively referred to as a downstream door 80.

### [Details of Cool Air Passage]

The cool air passage 40 includes an upstream cool air passage 41 between the cooling heat exchanger 13 and a swing range of the upstream door 70, a main mix space side cool air passage 42 through which cool air flowing from the upstream cool air passage 41 is branched by the upstream door 70 and flows toward the main mix space 27, a heater-side cool air passage 43 through which the cool air flowing from the upstream cool air passage 41 is branched by the upstream door 70 and flows toward the first heater 31, and a first heater bypass 44 through which cool air flowing from the heater-side cool air passage 43 bypasses the first heater 31 and flows. The first heater bypass 44 is a passage including a region between the first heater 31 and the rotation shaft 62.

### [Details of Warm Air Passage]

The warm air passage 50 includes an inter-heater warm air passage 51 through which warm air flowing out from the first heater 31 toward the second heater 36 flows, a second heater bypass 52 through which the warm air flowing out from the first heater 31 bypasses the second heater 36 and flows, and a downstream warm air passage 53 through which the warm air passing through the second heater bypass 52 or the warm air flowing out from the second heater 36 flows.

### [Disposition of First Heater and Second Heater]

The first heater 31 includes a first inflow surface 32 into which cool air flows, and a first outflow surface 33 from which warm air flows out that is the cool air flowing in from the first inflow surface 32 and heated inside the first heater 31. The second heater 36 includes a second inflow surface 37 into which the warm air flowing out from the first outflow surface 33 flows, and a second outflow surface 38 from which warm air flows out which is the warm air flowing in from the second inflow surface 37 and heated inside the second heater 36.

The second outflow surface 38 of the second heater 36 is smaller than the first inflow surface 32 of the first heater 31. The first outflow surface 33 is divided into a facing surface 33a facing the second inflow surface 37 and a non-facing surface 33b not facing the second inflow surface 37. The inter-heater warm air passage 51 can also be referred to as a passage between the facing surface 33a of the first heater 31 and the second inflow surface 37 **of** the second heater 36. The second heater bypass 52 can also be referred to as a passage downstream of the non-facing surface 33b of the first heater 31.

Although an example is illustrated in which the first outflow surface 33 of the first heater 31 and the second inflow surface 37 of the second heater 36 are parallel to each other, a position of the second heater 36 may be non-parallel to the first heater 31 as long as the second heater bypass 52 is provided in the case 20.

### [Position of Mix Door]

When the rotation shaft 62 is rotated, the upstream door 70 and the downstream door 80 swing about the rotation shaft 62, thereby changing a position of the mix door 60.

### [Full-cool Position]

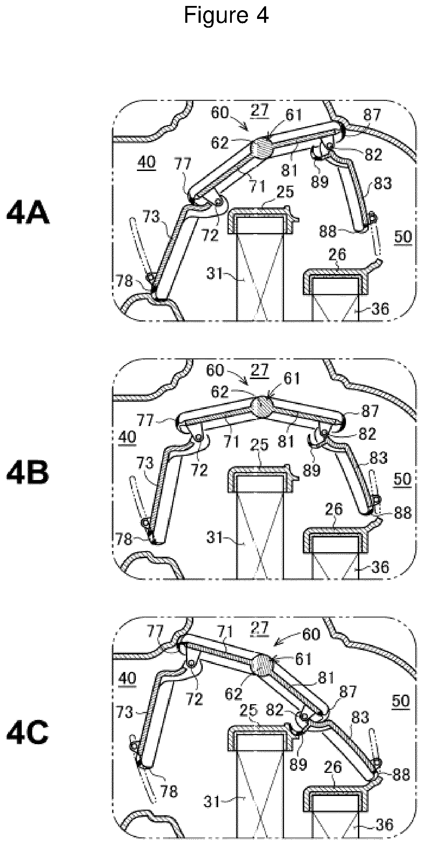

FIG. 4A illustrates the mix door 60 located at a full-cool position at which a ratio of the air flowing through the warm air passage 50 is minimized.

### [Temperature Conditioning Position]

FIG. 4B illustrates the mix door 60 located at a temperature conditioning position at which neither the ratio of the air flowing through the warm air passage 50 nor a ratio of the air flowing through the cool air passage 40 is maximized.

### [Full-hot Position]

FIG. 4C illustrates the mix door 60 located at a full-hot position at which the ratio of the air flowing through the warm air passage 50 is maximized.

### [Swinging of Downstream Driven Door]

Reference is made to FIG. 3 and FIGS. 4A to 4C. As the mix door 60 moves from the full-hot position to the full-cool position, both the downstream door angle θ2 and the downstream door diameter R2 decrease. In other words, as the mix door 60 moves from the full-hot position to the full-cool position, the downstream driven door 83 swings toward upstream (a side close to the first heater 31) of the downstream extension door 81 in the downstream warm air passage 53 (the downstream door angle θ2 gradually decreases).

### [Swinging of Upstream Driven Door]

As the mix door 60 moves from the full-cool position to the full-hot position, both the upstream door angle θ1 and the upstream door diameter R1 decrease. In other words, as the mix door 60 moves from the full-cool position to the full-hot position, the upstream driven door 73 swings toward downstream (a direction close to the first heater 31) of the upstream extension door 71 in the heater-side cool air passage 43 (the upstream door angle θ1 gradually decreases).

### [Configuration of Mix Door at Temperature Conditioning Position and Air Flow]

Reference is made to FIG. 3. At the temperature conditioning position, the upstream intermediate sealing member 77 is separated from a wall surface 20a at a downstream end of the main mix space side cool air passage 42. That is, the downstream end of the main mix space side cool air passage 42 is open. Cool air C1 can flow into the mix space 27 from the main mix space side cool air passage 42.

The upstream tip end sealing member 78 is separated from a wall surface 20b at an upstream end of the heater-side cool air passage 43. That is, the upstream end of the heater-side cool air passage 43 is open. Cool air C2 can flow from the upstream cool air passage 41 into the heater-side cool air passage 43. A part of the cool air C2 can flow, as cool air C3, into the first heater 31 from the first inflow surface 32 of the first heater 31.

A part of the cool air C3 flows out from the facing surface 33a of the first outflow surface 33 as warm air H1, flows through the inter-heater warm air passage 51, and flows into the second heater 36 from the second inflow surface 37 of the second heater 36. The warm air H1 flowing into the second heater 36 is further heated, flows out as warm air H2 from the second outflow surface 38 of the second heater 36, and flows into the downstream warm air passage 53.

The downstream second intermediate sealing member 89 is separated from the corner 25a (in the vicinity of an upper end of the first outflow surface 33) of the first support portion 25 of the first heater 31. That is, a downstream end of the first heater bypass 44 is open.

A part of the cool air C3 flows out from the non-facing surface 33b of the first outflow surface 33 as warm air H3, and flows through the second heater bypass 52. The warm air H3 and the cool air C4 flowing through the first heater bypass 44 are mixed to form mixed air M1, and a sub-mix space 28 is generated in a part of the second heater bypass 52.

The downstream tip end sealing member 88 is separated from a corner 26a (in the vicinity of an upper end of the second outflow surface 38) of the second support portion 26 of the second heater 36. That is, a downstream end of the second heater bypass 52 is open. The mixed air M1 in the sub-mix space 28 flows into the downstream warm air passage 53 and is mixed with the warm air H2 to form warm air H4.

The downstream intermediate sealing member 87 is separated from a wall surface 20c at a downstream end of the downstream warm air passage 53. That is, the downstream end of the downstream warm air passage 53 is open. The warm air H4 flows from the downstream warm air passage 53 into the main mix space 27.

In this manner, when the mix door 60 is at the temperature conditioning position, a part of the air flowing out from the cooling heat exchanger 13 flows through the cool air passage 40 as the cool air C1, and at the same time, another part of the air flows through the warm air passage 50 as the warm air H4. Therefore, when the mix door 60 is at the temperature conditioning position, neither the ratio of the air flowing through the warm air passage 50 nor the ratio of the air flowing through the cool air passage 40 is maximized.

### [Configuration of Mix Door at Full-hot Position and Air Flow]

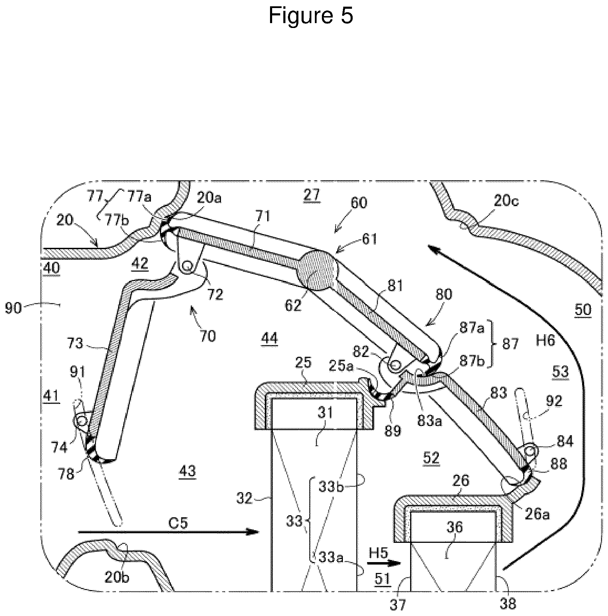

Reference is made to FIG. 5. At the full-hot position, the upstream door 70 is in a most bent state. The upstream door diameter R1 (FIG. 3) is the smallest, and the upstream door angle θ1 (FIG. 3) is the smallest.

The upstream intermediate sealing member 77 is in close contact with the wall surface 20a at the downstream end of the main mix space side cool air passage 42. That is, the downstream end of the main mix space side cool air passage 42 is closed. The upstream tip end sealing member 78 is separated from the wall surface 20b at the upstream end of the heater-side cool air passage 43. That is, the upstream end of the heater-side cool air passage 43 is open. Cool air C5 flows from the upstream cool air passage 41 into the heater-side cool air passage 43.

At the full-hot position, the downstream door 80 is in a most unfolded (opened) state. The downstream door diameter R2 (FIG. 3) is the largest, and the downstream door angle θ2 (FIG. 3) is the largest.

The downstream second intermediate sealing member 89 is in close contact with the corner 25a of the first support portion 25 of the first heater 31. That is, the downstream end of the first heater bypass 44 is closed. As long as the first heater bypass 44 is closed by any part of the downstream door 80 at the full-hot position, the downstream second intermediate sealing member 89 may be appropriately provided at any part of the downstream door 80. For example, the downstream second intermediate sealing member 89 may be provided in the downstream extension door 81 (not illustrated) .

The downstream intermediate sealing member 87 is in close contact with the proximal end 83a of the downstream driven door 83. It is possible to reduce or prevent the cool air from flowing from the first heater bypass 44 into the downstream warm air passage 53 via a gap between the downstream extension door 81 and the downstream driven door 83.

The cool air C5 flows through the heater-side cool air passage 43 without flowing through the first heater bypass 44, and flows into the first heater 31 from the first inflow surface 32 of the first heater 31. The cool air C5 heated by the first heater 31 flows out as warm air H5 from the first outflow surface 33 of the first heater 31.

The downstream tip end sealing member 88 is in close contact with the corner 26a of the second support portion 26 of the second heater 36. That is, the downstream end of the second heater bypass 52 is closed. The warm air H5 flows into the second heater 36 from the second inflow surface 37 of the second heater 36 without flowing through the second heater bypass 52. The warm air H5 is heated by the second heater 36 and flows out as warm air H6 from the second outflow surface 38 of the second heater 36.

The downstream intermediate sealing member 87 is separated from a wall surface 20c at a downstream end of the downstream warm air passage 53. The warm air H6 flows from the downstream warm air passage 53 into the main mix space 27. With the above configuration, a ratio of cool air flowing from the upstream cool air passage 41 into the heater-side cool air passage 43 is maximized. That is, the ratio of the air flowing through the warm air passage 50 is maximized.

### [Configuration of Mix Door at Full-cool Position and Air Flow]

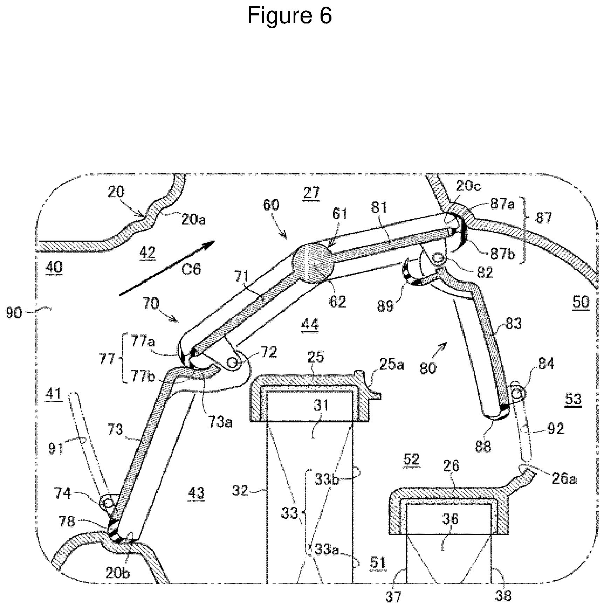

Reference is made to FIG. 6. At the full-cool position, the upstream door 70 is in a most unfolded state. The upstream door diameter R1 (FIG. 3) is the largest, and the upstream door angle θ1 (FIG. 3) is the largest.

The upstream tip end sealing member 78 is in close contact with the wall surface 20b at the upstream end of the heater-side cool air passage 43. That is, the upstream end of the heater-side cool air passage 43 is closed. The upstream intermediate sealing member 77 is separated from the wall surface 20a at the downstream end of the main mix space side cool air passage 42. That is, the downstream end of the main mix space side cool air passage 42 is open.

The upstream intermediate sealing member 77 is in close contact with a proximal end 73a (an end portion on a side close to the rotation shaft 62) of the upstream driven door 73, and reduces or prevents the cool air from flowing into the heater-side cool air passage 43 or the first heater bypass 44 via a gap between the upstream extension door 71 and the upstream driven door 73.

At the full-cool position, the downstream door 80 is in a most bent state. The downstream door diameter R2 (FIG. 3) is the smallest, and the downstream door angle θ2 (FIG. 3) is the smallest.

The downstream second intermediate sealing member 89 is separated from the corner 25a of the first support portion 25 of the first heater 31. That is, a downstream end of the first heater bypass 44 is open. The downstream tip end sealing member 88 is separated from the corner 26a of the second support portion 26 of the second heater 36. That is, a downstream end of the second heater bypass 52 is open. The downstream intermediate sealing member 87 is in close contact with the wall surface 20c at the downstream end of the downstream warm air passage 53. That is, the downstream end of the downstream warm air passage 53 is closed. With the above configuration, a ratio of cool air flowing from the upstream cool air passage 41 into the main mix space side cool air passage 42 is maximized. That is, the ratio of the air flowing through the warm air passage 50 is minimized.

### [Effects according to Embodiment]

### [Prevention of Increase in Size of Vehicular Air Conditioner]

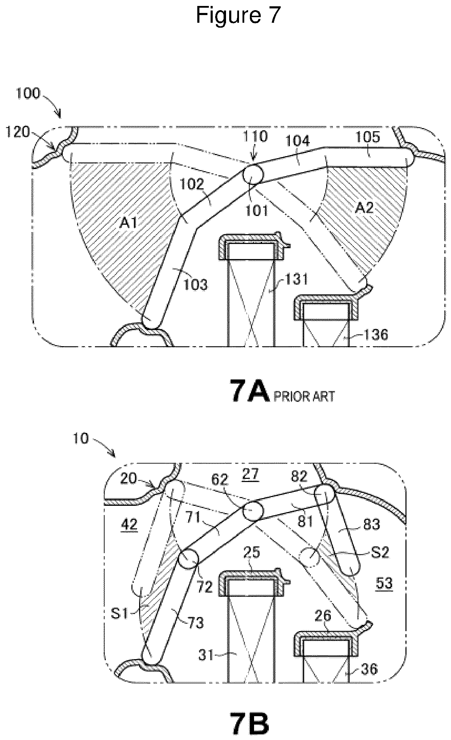

FIG. 7A illustrates a vehicular air conditioner 100 according to a comparative example. A case 120 of the vehicular air conditioner 100 accommodates a first heater 131 and a second heater 136 that are capable of heating cool air, and a mix door 110.

The mix door 110 includes a rotation shaft 101, an upstream extension door 102 extending from the rotation shaft 101 toward upstream, an upstream second extension door 103 further extending from a tip end of the upstream extension door 102 in a direction different from a direction in which the upstream extension door 102 extends, a downstream extension door 104 extending in a direction substantially opposite to the direction in which the upstream extension door 102 extends, and a downstream second extension door 105 further extending from a tip end of the downstream extension door 104 in a direction different from the direction in which the upstream extension door 102 extends.

When the mix door 110 moves from a full-hot position to a full-cool position, a region through which the upstream second extension door 103 passes is defined as an upstream passing comparison region A1. When the mix door 110 moves from the full-hot position to the full-cool position, a region through which the downstream second extension door 105 passes is defined as a downstream passing comparison region A2.

FIG. 7B schematically illustrates the mix door 60. The downstream door diameter R2 at the full-cool position is smaller than the downstream door diameter R2 at the full-hot position. Further, at the full-cool position, the downstream driven door 83 is bent toward upstream of the downstream extension door 81 in the downstream warm air passage 53.

When the mix door 60 moves from the full-hot position to the full-cool position, a region through which the downstream driven door 83 passes is defined as a downstream passing region S2. As compared with the downstream passing comparison region A2 in FIG. 7A, the downstream passing region S2 is smaller when the mix door 60 moves. Therefore, the wall surface of the downstream warm air passage 53 can be brought close to the mix door 60 (a wall surface of the warm air passage 50 is brought close to the rotation shaft 62 of the mix door 60), the vicinity of the downstream warm air passage 53 in the case 20 can be reduced in size, and an increase in a size of the vehicular air conditioner 10 can be prevented.

Similarly, the upstream door diameter R1 at the full-hot position is smaller than the upstream door diameter R1 at the full-cool position. Further, at the full-hot position, the upstream driven door 73 is bent toward upstream (a direction close to the first heater 31) of the upstream extension door 71 in the main mix space side cool air passage 42.

When the mix door 60 moves from the full-hot position to the full-cool position, a region through which the upstream driven door 73 passes is defined as an upstream passing region S1. As compared with the upstream passing comparison region A1 in FIG. 7A, the upstream passing region S1 is smaller when the mix door 60 moves. Therefore, the wall surface of the main mix space side cool air passage 42 can be brought close to the mix door 60 (a wall surface of the cool air passage 40 is brought close to the rotation shaft 62 of the mix door 60), the vicinity of the main mix space side cool air passage 42 in the case 20 can be reduced in size, and the increase in the size of the vehicular air conditioner 10 can be prevented.

### [Prevention of Increase in Airflow Resistance]

As the mix door 60 moves from the full-hot position to the full-cool position, the downstream driven door 83 swings toward upstream of the downstream extension door 81 in the downstream warm air passage 53. That is, as the mix door 60 moves from the full-hot position to the full-cool position, the downstream door diameter R2 gradually decreases.

Since the downstream driven door 83 is gradually bent as the mix door 60 moves to the full-cool position, the wall surface of the downstream warm air passage 53 can also be gradually brought close to the mix door 60. It is possible to reduce a size of the case 20 while preventing an increase in airflow resistance of the downstream warm air passage 53.

Similarly, as the mix door 60 moves from the full-cool position to the full-hot position, the upstream driven door 73 swings toward upstream of the upstream extension door 71 in the main mix space side cool air passage 42. That is, as the mix door 60 moves from the full-cool position to the full-hot position, the upstream door diameter R1 gradually decreases.

Since the upstream driven door 73 is gradually bent as the mix door 60 moves to the full-hot position, the wall surface of the main mix space side cool air passage 42 can also be gradually brought close to the mix door 60 while securing a passage of the cool air passage 40. It is possible to reduce the size of the case 20 while preventing an increase in airflow resistance of the main mix space side cool air passage 42.

### [Improvement in Heating Performance]

Reference is made to FIG. 5. At the full-hot position, the downstream end of the first heater bypass 44 and the downstream end of the second heater bypass 52 are both closed. Specifically, the downstream driven door 83 is opened with respect to the downstream extension door 81 such that the downstream door diameter R2 increases, and a ratio of the air flowing through the second heater bypass 52 is minimized. That is, a ratio of the air heated by both the first heater 31 and the second heater 36 to the cool air C5 flowing from the upstream cool air passage 41 into the heater-side cool air passage 43 is maximized. A heating efficiency at the full-hot position can be increased.

### [Reduction in Number of Components of Intermediate Sealing Members]

Reference is made to FIG. 3. The upstream intermediate sealing member 77 integrally includes a full-hot side sealing portion 77a that can come into contact with the case 20 at the full-hot position, and a full-cool side sealing portion 77b that can come into contact with the proximal end 73a of the upstream extension door 73 at the full-cool position. Although the full-hot side sealing portion 77a and the full-cool side sealing portion 77b may be provided separately, the number of components can be reduced by integrating the full-hot side sealing portion 77a and the full-cool side sealing portion 77b.

Similarly, the downstream intermediate sealing member 87 integrally includes a full-hot side sealing portion 87a that can come into contact with a heater support portion 29 at the full-hot position, and a full-cool side sealing portion 87b that can come into contact with the proximal end 83a of the downstream driven door 83 at the full-cool position. Although the full-cool side sealing portion 87a and the full-hot side sealing portion 87b may be provided separately, the number of components can be reduced by integrating the full-cool side sealing portion 87a and the full-hot side sealing portion 87b.

The invention is defined by the appended claims and is not limited to the illustrated embodiment.

### Industrial Applicability

The vehicular air conditioner according to the invention is suitable for being mounted on a passenger vehicle.

### Reference Signs List

- 10:: vehicular air conditioner
- 13:: cooling heat exchanger
- 20:: case
- 27:: main mix space (mix space)
- 31:: first heater
- 36:: second heater
- 40:: cool air passage
- 50:: warm air passage
- 60:: mix door
- 61:: butterfly door portion
- 71:: upstream extension door
- 72:: upstream hinge
- 73:: upstream driven door
- 81:: downstream extension door
- 82:: downstream hinge
- 83:: downstream driven door
- R1:: upstream door diameter
- R2:: downstream door diameter

## Claims

1. A vehicular air conditioner (10) comprising: a case (20) in which air flows; a cooling heat exchanger (13) capable of cooling the air flowing through the case (20); a first heater (31) capable of heating the air flowing out from the cooling heat exchanger (13); a second heater (36) capable of heating the air flowing out from the first heater (31); a warm air passage (50) through which the air flowing out from the first heater (31) or the second heater (36) flows; a cool air passage (40) through which the air flowing out from the cooling heat exchanger (13) flows without being heated by the first heater (31); a mix door (60) capable of adjusting a ratio of the air flowing through the warm air passage (50) to the air flowing through the cool air passage (40); and a mix space (27) in which the air flowing through the warm air passage (50) and the air flowing through the cool air passage (40) merge, wherein
the mix door (60) includes a butterfly door portion (61) including a rotation shaft (62) substantially orthogonal to a flow direction of the air flowing through the cool air passage (40), an upstream extension door (71) extending from the rotation shaft (62) and being movable upstream of the rotation shaft (62), and a downstream extension door (81) extending from the rotation shaft (62) in a direction substantially opposite to a direction in which the upstream extension door (71) extends,
in the mix door (60), the upstream extension door (71) and the downstream extension door (81) swing about the rotation shaft (62), and the mix door (60) is capable of being located at a full-cool position at which a ratio of the air flowing through the warm air passage (50) is minimized, a full-hot position at which the ratio of the air flowing through the warm air passage (50) is maximized, and a temperature conditioning position at which neither the ratio of the air flowing through the warm air passage (50) nor a ratio of the air flowing through the cool air passage (40) is maximized,
**characterized in that** a downstream driven door (83) having a plate shape is connected to an extended tip end of the downstream extension door (81) via a downstream hinge (82),
a downstream door diameter (R2) from the rotation shaft (62) to a tip end of the downstream driven door (83) is variable,
the downstream door diameter (R2) is smaller when the mix door (60) is at the full-cool position than that when the mix door (60) is at the full-hot position, and
the downstream driven door (83) is bent toward upstream of the downstream extension door (81) in the warm air passage (50) when the mix door (60) is at the full-cool position.

2. The vehicular air conditioner (10) according to claim 1, wherein
the warm air passage (50) includes a second heater bypass (52) through which the air flowing out from the first heater (31) is capable of bypassing the second heater (36) to flow, and
when the mix door (60) is at the full-hot position, the downstream driven door (83) is opened with respect to the downstream extension door (81) such that the downstream door diameter (R2) increases, and a ratio of the air flowing through the second heater bypass (52) is minimized.

3. The vehicular air conditioner (10) according to claim 1 or 2, wherein
as the mix door (60) moves from the full-hot position to the full-cool position, the downstream driven door (83) swings toward upstream of the downstream extension door (81) in the warm air passage (50).

4. The vehicular air conditioner (10) according to claim 1 or 2, wherein
an upstream driven door (73) having a plate shape is connected to an extended tip end of the upstream extension door (71) via an upstream hinge (72),
an upstream door diameter (R1) from the rotation shaft (62) to a tip end of the upstream driven door (73) is variable,
the upstream door diameter (R1) is smaller when the mix door (60) is at the full-hot position than that when the mix door (60) is at the full-cool position, and
the upstream driven door (73) is bent toward downstream of the upstream extension door (71), in a direction close to the first heater (31), when the mix door (60) is at the full-hot position.

## Patentansprüche

1. Eine Fahrzeugklimaanlage (10), umfassend: ein Gehäuse (20), in dem Luft strömt; einen Kühlwärmetauscher (13), der die durch das Gehäuse (20) strömende Luft kühlen kann; eine erste Heizung (31), die die aus dem Kühlwärmetauscher (13) ausströmende Luft erwärmen kann; eine zweite Heizung (36), die die aus der ersten Heizung (31) ausströmende Luft erwärmen kann; einen Warmluftkanal (50), durch den die aus der ersten Heizung (31) oder der zweiten Heizung (36) ausströmende Luft strömt; einen Kaltluftkanal (40), durch den die aus dem Kühlwärmetauscher (13) ausströmende Luft strömt, ohne von der ersten Heizung (31) erwärmt zu werden; eine Mischklappe (60), die ein Verhältnis der durch den Warmluftkanal (50) strömenden Luft zu der durch den Kaltluftkanal (40) strömenden Luft einstellen kann; und einen Mischraum (27), in dem die durch den Warmluftkanal (50) strömende Luft und die durch den Kaltluftkanal (40) strömende Luft zusammenfließen, wobei die Mischklappe (60) einen Drosselklappenabschnitt (61) mit einer Drehwelle (62) umfasst, die im Wesentlichen orthogonal zur Strömungsrichtung der durch den Kaltluftkanal (40) strömenden Luft verläuft, eine stromaufwärts gerichtete Verlängerungsklappe (71), die sich von der Drehwelle (62) erstreckt und stromaufwärts der Drehwelle (62) beweglich ist, und eine stromabwärts gerichtete Verlängerungsklappe (81), die sich von der Drehwelle (62) in eine Richtung erstreckt, die im Wesentlichen entgegengesetzt zu der Richtung ist, in die sich die stromaufwärts gerichtete Verlängerungsklappe (71) erstreckt, wobei in der Mischklappe (60) die stromaufwärts gerichtete Verlängerungsklappe (71) und die stromabwärts gerichtete Verlängerungsklappe (81) um die Drehwelle (62) schwenken, und die Mischklappe (60) in einer vollständigen Kühlposition, in der ein Verhältnis der durch den Warmluftkanal (50) strömenden Luft minimiert ist, einer vollständigen Heizposition, in der das Verhältnis der durch den Warmluftkanal (50) strömenden Luft maximiert ist, und einer Temperaturkonditionierungsposition, in der weder das Verhältnis der durch den Warmluftkanal (50) strömenden Luft noch ein Verhältnis der durch den Kaltluftkanal (40) strömenden Luft maximiert ist, positioniert werden kann, **dadurch gekennzeichnet, dass** eine stromabwärts gerichtete angetriebene Klappe (83) mit einer Plattenform über ein stromabwärts gerichtetes Scharnier (82) mit einem verlängerten Endstück der stromabwärts gerichteten Verlängerungsklappe (81) verbunden ist, ein stromabwärts gerichteter Klappendurchmesser (R2) von der Drehwelle (62) zu einem Endstück der stromabwärts gerichteten angetriebenen Klappe (83) variabel ist, der stromabwärts gerichtete Klappendurchmesser (R2) kleiner ist, wenn die Mischklappe (60) in der vollständigen Kühlposition ist, als wenn die Mischklappe (60) in der vollständigen Heizposition ist, und die stromabwärts gerichtete angetriebene Klappe (83) in Richtung stromaufwärts der stromabwärts gerichteten Verlängerungsklappe (81) im Warmluftkanal (50) gebogen ist, wenn die Mischklappe (60) in der vollständigen Kühlposition ist.

2. Die Fahrzeugklimaanlage (10) nach Anspruch 1, wobei der Warmluftkanal (50) eine zweite Heizungsumgehung (52) umfasst, durch die die aus der ersten Heizung (31) ausströmende Luft die zweite Heizung (36) umgehen kann, und wenn die Mischklappe (60) in der vollständigen Heizposition ist, die stromabwärts gerichtete angetriebene Klappe (83) in Bezug auf die stromabwärts gerichtete Verlängerungsklappe (81) geöffnet ist, sodass der stromabwärts gerichtete Klappendurchmesser (R2) zunimmt, und ein Verhältnis der durch die zweite Heizungsumgehung (52) strömenden Luft minimiert ist.

3. Die Fahrzeugklimaanlage (10) nach Anspruch 1 oder 2, wobei, wenn sich die Mischklappe (60) von der vollständigen Heizposition zur vollständigen Kühlposition bewegt, die stromabwärts gerichtete angetriebene Klappe (83) in Richtung stromaufwärts der stromabwärts gerichteten Verlängerungsklappe (81) im Warmluftkanal (50) schwenkt.

4. Die Fahrzeugklimaanlage (10) nach Anspruch 1 oder 2, wobei eine stromaufwärts gerichtete angetriebene Klappe (73) mit einer Plattenform über ein stromaufwärts gerichtetes Scharnier (72) mit einem verlängerten Endstück der stromaufwärts gerichteten Verlängerungsklappe (71) verbunden ist, ein stromaufwärts gerichteter Klappendurchmesser (R1) von der Drehwelle (62) zu einem Endstück der stromaufwärts gerichteten angetriebenen Klappe (73) variabel ist, der stromaufwärts gerichtete Klappendurchmesser (R1) kleiner ist, wenn die Mischklappe (60) in der vollständigen Heizposition ist, als wenn die Mischklappe (60) in der vollständigen Kühlposition ist, und die stromaufwärts gerichtete angetriebene Klappe (73) in Richtung stromabwärts der stromaufwärts gerichteten Verlängerungsklappe (71), in eine Richtung nahe der ersten Heizung (31), gebogen ist, wenn die Mischklappe (60) in der vollständigen Heizposition ist.

## Revendications

1. Un climatiseur de véhicule (10) comprenant: un boîtier (20) dans lequel l'air circule ; un échangeur de chaleur de refroidissement (13) capable de refroidir l'air circulant à travers le boîtier (20) ; un premier chauffage (31) capable de chauffer l'air sortant de l'échangeur de chaleur de refroidissement (13) ; un second chauffage (36) capable de chauffer l'air sortant du premier chauffage (31) ; un passage d'air chaud (50) à travers lequel circule l'air sortant du premier chauffage (31) ou du second chauffage (36) ; un passage d'air frais (40) à travers lequel circule l'air sortant de l'échangeur de chaleur de refroidissement (13) sans être chauffé par le premier chauffage (31) ; une porte de mélange (60) capable d'ajuster un rapport entre l'air circulant à travers le passage d'air chaud (50) et l'air circulant à travers le passage d'air frais (40) ; et un espace de mélange (27) dans lequel l'air circulant à travers le passage d'air chaud (50) et l'air circulant à travers le passage d'air frais (40) fusionnent, dans lequel la porte de mélange (60) comprend une partie de porte papillon (61) comprenant un arbre de rotation (62) sensiblement orthogonal à une direction d'écoulement de l'air circulant à travers le passage d'air frais (40), une porte d'extension amont (71) s'étendant depuis l'arbre de rotation (62) et étant mobile en amont de l'arbre de rotation (62), et une porte d'extension aval (81) s'étendant depuis l'arbre de rotation (62) dans une direction sensiblement opposée à une direction dans laquelle s'étend la porte d'extension amont (71), dans la porte de mélange (60), la porte d'extension amont (71) et la porte d'extension aval (81) pivotent autour de l'arbre de rotation (62), et la porte de mélange (60) est capable d'être située à une position de refroidissement maximal à laquelle un rapport de l'air circulant à travers le passage d'air chaud (50) est minimisé, une position de chauffage maximal à laquelle le rapport de l'air circulant à travers le passage d'air chaud (50) est maximisé, et une position de conditionnement de température à laquelle ni le rapport de l'air circulant à travers le passage d'air chaud (50) ni un rapport de l'air circulant à travers le passage d'air frais (40) n'est maximisé, **caractérisé en ce qu'**une porte entraînée aval (83) ayant une forme de plaque est connectée à une extrémité de pointe étendue de la porte d'extension aval (81) via une charnière aval (82), un diamètre de porte aval (R2) de l'arbre de rotation (62) à une extrémité de la porte entraînée aval (83) est variable, le diamètre de porte aval (R2) est plus petit lorsque la porte de mélange (60) est à la position de refroidissement maximal que lorsque la porte de mélange (60) est à la position de chauffage maximal, et la porte entraînée aval (83) est pliée vers l'amont de la porte d'extension aval (81) dans le passage d'air chaud (50) lorsque la porte de mélange (60) est à la position de refroidissement maximal.

2. Le climatiseur de véhicule (10) selon la revendication 1, dans lequel le passage d'air chaud (50) comprend un bypass du second chauffage (52) à travers lequel l'air sortant du premier chauffage (31) est capable de contourner le second chauffage (36) pour circuler, et lorsque la porte de mélange (60) est à la position de chauffage maximal, la porte entraînée aval (83) est ouverte par rapport à la porte d'extension aval (81) de sorte que le diamètre de porte aval (R2) augmente, et un rapport de l'air circulant à travers le bypass du second chauffage (52) est minimisé.

3. Le climatiseur de véhicule (10) selon la revendication 1 ou 2, dans lequel, à mesure que la porte de mélange (60) se déplace de la position de chauffage maximal à la position de refroidissement maximal, la porte entraînée aval (83) pivote vers l'amont de la porte d'extension aval (81) dans le passage d'air chaud (50).

4. Le climatiseur de véhicule (10) selon la revendication 1 ou 2, dans lequel une porte entraînée amont (73) ayant une forme de plaque est connectée à une extrémité de pointe étendue de la porte d'extension amont (71) via une charnière amont (72), un diamètre de porte amont (R1) de l'arbre de rotation (62) à une extrémité de la porte entraînée amont (73) est variable, le diamètre de porte amont (R1) est plus petit lorsque la porte de mélange (60) est à la position de chauffage maximal que lorsque la porte de mélange (60) est à la position de refroidissement maximal, et la porte entraînée amont (73) est pliée vers l'aval de la porte d'extension amont (71), dans une direction proche du premier chauffage (31), lorsque la porte de mélange (60) est à la position de chauffage maximal.
